# EUROPÄISCHE PATENTSCHRIFT

(11) **EP 3 640 497 B1**
(45) Veröffentlichungstag und Bekanntmachung des Hinweises auf die Patenterteilung: **26.06.2024**
(21) Anmeldenummer: 19195014.6
(22) Anmeldetag: 03.09.2019
(51) Int. Cl.: F16F 9/05, F16F 9/32

(54) **FAHRZEUG MIT EINER GASDRUCKFEDER MIT EINER EINRICHTUNG ZUR BESTIMMUNG DES AXIALEN ABSTANDES ZWEIER ENDGLIEDER DERSELBEN**
VEHICLE WITH A GAS SPRING WITH A DEVICE FOR DETERMINING THE AXIAL SPACING OF TWO END ELEMENTS OF THE SAME
VÉHICULE AVEC UN RESSORT À GAZ DOTÉ D'UN DISPOSITIF DE DÉTERMINATION DES DISTANCES AXIALES DE DEUX ÉLÉMENTS D'EXTRÉMITÉ L'UN PAR RAPPORT À L'AUTRE

(30) Priorität: 12.10.2018 DE 102018217485
(43) Veröffentlichungstag der Anmeldung: 22.04.2020
(73) Patentinhaber: ContiTech Deutschland GmbH, 30175 Hannover (DE)
(72) Erfinder: Kranz, Harald, 30165 Hannover (DE)
(74) Vertreter: Continental Corporation

(56) Entgegenhaltungen:
- EP-A1- 1 526 014
- EP-A1- 2 735 760
- EP-A1- 2 792 516
- WO-A1-2012/054520
- DE-A1-102016 222 663

## Beschreibung

Die Erfindung betrifft ein Fahrzeug, aufweisend ein Fahrwerk, eine Karosserie und eine Gasdruckfeder mit einer Einrichtung zur Bestimmung des axialen Abstandes zweier in axialer Richtung der Gasdruckfeder zueinander beweglich angeordneter Endglieder der Gasdruckfeder.

In modernen Federungssystemen werden Gasdruckfedern genutzt, da diese unter anderem einen besseren Federungskomfort und eine Niveau-Regulierung ermöglichen. Gasdruckfedern kommen beispielsweise in Schienenfahrzeugen, Omnibussen, Lastkraftwagen und Personenkraftwagen zum Einsatz. Insbesondere werden Gasdruckfedern zur Federung von Fahrersitzen von Lastkraftwagen und Omnibussen beziehungsweise zur Federung der Fahrerhäuser von Lastkraftwagen sowie zur Federung von Schienenfahrzeug-Drehgestellen und zur Federung des Chassis von Omnibussen, Lastkraftwagen und Personenkraftwagen verwendet. Bei der Federung von Omnibussen, Lastkraftwagen oder Personenkraftwagen mit Hilfe von Gasdruckfedern werden diese zwischen den gefederten und ungefederten Teilen des Fahrzeuges angebracht und über einen Ventilmechanismus mit einer Druckluftquelle verbunden, mittels denen die Druckluft einer Gasdruckfeder zugeführt oder von dieser abgelassen werden kann, um die Höhe des gefederten Teils in Bezug zu dem ungefederten Teil einzustellen sowie vorzugsweise konstant zu halten.

Das in den Ventilmechanismus eingesetzte Ventil kann beispielsweise durch einen mechanischen Betätigungsarm betätigt werden, der auf eine Relativbewegung zwischen den gefederten und ungefederten Teilen des Fahrzeuges reagiert und das Ventil öffnet oder schließt. Mit einem mechanischen Betätigungsarm ist die Regelung des Ventils zwar möglich, jedoch ist als nachteilig anzusehen, dass der Betätigungsarm eine relativ komplizierte Konstruktion aufweist und darüber hinaus unter dem Fahrzeug freiliegt und somit Einwirkungen von Straßenschmutz, Wasser und auch korrosiven Stoffen ständig ausgesetzt ist.

In der DE 36 20 957 A1 ist deshalb vorgeschlagen worden, den axialen Abstand der beiden Endglieder einer Gasdruckfeder, der zu dem Abstand zwischen den gefederten und ungefederten Teilen eines Fahrzeuges direkt proportial ist, mit Hilfe eines Ultraschallsensors zu bestimmen und dann einzustellen, welcher innerhalb der Gasdruckfeder angeordnet und somit keinerlei Umwelteinflüssen ausgesetzt ist.

Gemäß einem ersten aus der DE 36 20 957 A1 bekannten Ausführungsbeispiel umfasst der Ultraschallsensor einen Ultraschallsender sowie einen Ultraschallempfänger und ist an einem Endglied der Gasdruckfeder angeordnet. An dem gegenüberliegenden Endglied der Gasdruckfeder ist ein Reflektor angebracht. Mit dieser Anordnung wird der axiale Abstand zwischen den beiden Endgliedern der Gasdruckfedern wie folgt gemessen: Der Ultraschallsender sendet an den Reflektor einen Ultraschallimpuls aus, der dort nach Durchlaufen der axialen Länge der Gasdruckfeder reflektiert und nach einem weiteren Durchlauf der axialen Länge der Gasdruckfeder von dem Ultraschallempfänger wieder empfangen wird. Aus der Laufzeit des Ultraschallimpulses wird der axiale Abstand zwischen den Endgliedern der Gasdruckfeder bestimmt. Unter Nutzung dieses Messwertes wird, gesteuert von einem Steuerungsgerät, über ein der Gasdruckfeder zugeordnetes Ventil der Gasdruckfeder Druckluft zugeführt oder von dieser abgelassen, sofern der gemessene axiale Abstand nicht einem vorgegebenen axialen Abstand der Endglieder entspricht.

Die Bestimmung des axialen Abstandes der Endglieder der Gasdruckfeder kann offensichtlich nur dann funktionieren, wenn der Ultraschallimpuls an dem Reflektor derartig reflektiert wird, dass er nach einem weiteren Durchlauf durch die Gasdruckfeder von dem Ultraschallempfänger empfangen wird. Eine derartige Reflektion ist aber keineswegs immer gewährleistet, da sich die beiden Endglieder der Gasdruckfeder nicht nur axial zueinander bewegen. Vielmehr kann es aufgrund einer fehlenden axialen Führung der Gasdruckfeder dazu kommen, dass die beiden Endglieder der Gasdruckfeder seitlich zueinander versetzt werden. In diesem Fall sind der Reflektor und der Ultraschallempfänger nicht mehr richtig zueinander ausgerichtet, sodass der reflektierte Ultraschallimpuls nicht mehr von dem Ultraschallempfänger empfangen werden kann. Diesem Problem kann keinesfalls dadurch abgeholfen werden, dass der Ultraschallsender einen Ultraschallimpuls mit einer breiten Keulenform aussendet, da es dann zu Reflexionen an den unterschiedlichsten Stellen der Gasdruckfeder kommen kann, welche das Messergebnis verfälschen.

Wohl aus diesem Grunde ist in der DE 36 20 957 A1 auch vorgeschlagen worden, den Ultraschallsensor derartig auszubilden, dass der Ultraschallsender an einem Endglied und der Ultraschallempfänger an dem gegenüberliegenden Endglied der Gasdruckfeder angeordnet sind. In diesem Fall kann nämlich der Ultraschallsender einen Ultraschallimpuls mit einer breiten Keulenform aussenden, so dass auch bei einem seitlichen Versatz zwischen dem Ultraschallsender und dem Ultraschallempfänger der Ultraschallimpuls noch von dem Ultraschallempfänger empfangen wird. Aus der Laufzeit des Ultraschallimpulses von dem Ultraschallsender zu dem Ultraschallempfänger kann dann der axiale Abstand zwischen den Endgliedern der Gasdruckfeder bestimmt werden.

In der DE 197 01 530 C1 ist beschrieben worden, wie mithilfe der gemessenen Laufzeit des Ultraschallimpulses der jeweilige Abstand zwischen den beiden Endglieder ermittelbar ist. Bei der dort vorgestellten Einrichtung zur Bestimmung des axialen Abstandes zweier Endglieder einer Gasdruckfeder befindet sich der Ultraschallsender an dem chassisseitigen Endglied der Gasdruckfeder, während ein Ultraschallempfänger an einem fahrwerkseitigen Abrollkolben befestigt ist.

DE 10 2016 222 663 A1 offenbart ein Fahrzeug, aufweisend ein Fahrwerk, eine Karosserie und eine Gasdruckfeder mit zueinander beweglich angeordneten Endgliedern, wobei die beiden Endglieder mit einem flexiblen Balg verbunden sind, welcher einen Innenraum der Gasdruckfeder begrenzt. An dem fahrwerkseitigen Endglied ist ein metallischer Stützkörper befestigt, an dessen radialer Außenseite eine Dämpfungsschicht aus einem Elastomer befestigt ist, an welcher ein metallischer Stützring befestigt ist, an dem sich das fahrwerkseitige Ende des Balgs sowohl axial als auch radial abstützt. Die Gasdruckfeder umfasst eine Einrichtung zur Bestimmung des Abstands zwischen dem Stützglied und einer Gleitscheibe im Inneren der Gasdruckfeder.

Der Erfindung lag die Erkenntnis zugrunde, dass die Anordnung des aktiven Teils einer Abstandsmesseinrichtung an dem chassisseitigen Endglied der Gasdruckfeder ungünstig ist, denn das Chassis eines Fahrzeugs kann aufgrund dessen Federung mittels der Gasdruckfeder Bewegungen in allen drei Raumrichtungen durchführen. Diese Bewegungen vollführt dann nachteilig auch der aktive Teil des Abstandssensors, dessen Sendesignal dadurch mehr oder nur weniger gut auf einen Reflektor oder Empfänger des Abstandssensors ausgerichtet ist. Anders ist dies bei dem fahrwerksseitigen Endglied der Gasdruckfeder, denn dieses durch seine Befestigung an einem Fahrwerksbauteil als ortsfest anzusehen.

Der Erfindung lag die Aufgabe zugrunde, ein Fahrzeug mit einer Gasdruckfeder mit einer darin integrierten Abstandsmesseinrichtung vorzustellen, welche genauer als bisher den Abstand zwischen dem fahrwerksseitigen und dem chassisseitigen Endglied einer Gasdruckfeder messen kann.

Die Lösung dieser Aufgabe wird mit einem Fahrzeug erreicht, welches die Merkmale des Anspruchs 1 aufweist. Vorteilhafte Weiterbildungen sind in den abhängigen Ansprüchen definiert.

Demnach vorgesehen ist eine Einrichtung zur Bestimmung des axialen Abstandes zweier Endglieder einer Gasdruckfeder, welche in axialer Richtung der Gasdruckfeder zueinander beweglich angeordnet sind, wobei die beiden Endglieder unmittelbar oder mittelbar mit einem flexiblen Balg verbunden sind, welcher einen Innenraum der Gasdruckfeder begrenzt, wobei an einem der beiden Endglieder ein Abstandsensor angeordnet ist, mit dessen Hilfe der axiale Abstand zwischen den beiden Endgliedern bestimmbar ist, wobei an dem fahrwerkseitigen Endglied ein metallischer Stützkörper befestigt ist, an dessen radialen Außenseite eine Dämpfungsschicht aus einem Elastomer befestigt ist, und dass an der radialen Außenseite der Dämpfungsschicht ein metallischer Stützring befestigt ist, an dem sich das fahrwerkseitige Ende des Balgs sowohl axial als auch radial abstützt.

Zur Lösung der gestellten Aufgabe ist bei dieser Einrichtung vorgesehen, dass der der Abstandssensor im Bereich des karosserieseitig oberen Endes des metallischen Stützkörpers mit Sicht auf die Unterseite des oberen Endglieds angeordnet ist.

Durch die Befestigung des Abstandssensors über den metallischen Stützkörper an dem fahrwerkseitigen Endglied der Gasdruckfeder ist die Ort des Abstandssensors im Raum stets konstant, denn der Abstandssensor ist nach der Montage der Gasdruckfeder an einem Fahrzeug ortsfest mit einem Fahrwerksteil verbunden. Im Ergebnis lässt sich der Abstand des karosserieseitigen Endglieds zum fahrwerksseitigen Endglied der Gasdruckfeder mit größerer Betriebssicherheit sehr viel genauer als bisher bestimmen.

Bevorzugt kommt ein metallischer Stützkörper zum Einsatz, der eine kegelabschnittförmige Geometrie mit einem fahrwerkseitig größeren Durchmesser aufweist. Hierdurch hat der Stützkörper eine vergleichsweise große Standfläche zur Befestigung an dem fahrwerkseitigem Endglied der Gasdruckfeder sowie ein geringeres Gewicht als ein zylindrischer Stützkörper aus dem gleichen Material.

Zudem ist bevorzugt vorgesehen, dass am karosserieseitigen oberen Ende des Stützrings ein ringförmiger Anschlagdämpfer befestigt ist. Dessen freier Innendurchmesser ist derartig bemessen, dass die Sendekeule des aktiven Teils beziehungsweise des Senders des Abstandssensors sowie ein diesbezüglich reflektierter Strahl den Anschlagdämpfer problemlos passieren können.

Weiter ist erfindungsgemäß vorgesehen, dass der den Innenraum mit Druckluft versorgender Luftanschluss am oberen Endglied zwar innerhalb des Messbereiches des Abstandssensors angeordnet ist, jedoch innenraumseitig durch ein luftdurchlässiges Gitter abgedeckt ist. Dieses Gitter ist dabei derartig ausgebildet, dass es einen Sensorstrahl des Sensors des Abstandssensors reflektiert.

Der Abstandssensor ist derart aufgebaut, dass er ein an sich bekanntes mechanisches, optisches oder akustisches Messprinzip zur Abstandsmessung nutzt.

Um die signalaktive Oberfläche des Abstandssensors frei von Verschmutzungen zu halten ist gemäß einer anderen vorteilhaften Weiterbildung vorgesehen, dass innerhalb der Einrichtung Luftleitmittel angeordnet oder ausgebildet sind, welche bei einer Bewegung des Balgs die innerhalb des Balges befindliche Luft gezielt über den Abstandssensor, zumindest aber über dessen signalaktive Oberfläche leiten. Diese Luftleitmittel sind beispielsweise als Luftleitbleche oder radiale Öffnungen im Anschlagdämpfer ausgebildet, über beziehungsweise durch welche Luft zu dem Abstandssensor geleitet wird.

In einem nicht erfindungsgemäßen Fahrzeug kann vorgesehen sein, dass anstelle des metallischen Stützkörpers, der elastomeren Dämpfungsschicht und dem metallischen Stützring eine Zusatzfeder an dem unteren Endglied befestigt ist, dass die Zusatzfeder aus einem massiven elastomeren Block oder aus mehreren übereinander angeordneten elastomeren Schichten besteht, dass die Zusatzfeder eine radial zentrale sowie sich koaxial zur Längsachse der Gasdruckfeder erstreckende Bohrung aufweist, und dass der Abstandssensor innerhalb der Bohrung an Oberseite des unteren Endglieds mit freier Sicht auf die Unterseite des oberen Endglieds befestigt ist.

Zur weiteren Verdeutlichung der Erfindung werden nachfolgend zwei Ausführungsbeispiele anhand der beigefügten Zeichnung vorgestellt. Darin zeigt
Fig. 1 einen schematischen Querschnitt durch eine Merkmale der Erfindung aufweisende erste Einrichtung zur Bestimmung des axialen Abstandes zweier Endglieder einer Gasdruckfeder eines erfindungsgemäßen Fahrzeugs in einer Ausgangssituation,
Fig. 2 die Einrichtung gemäß Fig. 1, bei welcher die beiden Endglieder der Gasdruckfeder parallel gegeneinander verschoben angeordnet sind, und
Fig. 3 einen schematischen Querschnitt durch eine Einrichtung zur Bestimmung des axialen Abstandes zweier Endglieder einer Gasdruckfeder mit einer blockartigen Zusatzfeder, die nicht der erfindungsgemäßen Lösung entspricht.

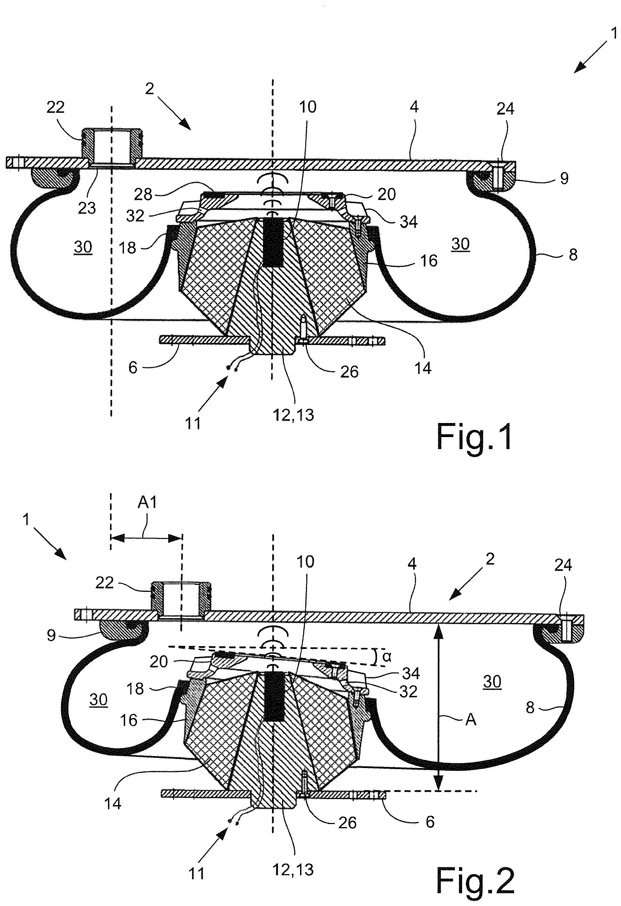

Die in den Figuren 1 und 2 dargestellte Einrichtung 1.1 weist eine Gasdruckfeder 2 mit zwei Endgliedern 4, 6 auf, deren axialer Abstand A zueinander zu bestimmen ist. Die beiden Endglieder 4, 6 sind plattenförmig ausgebildet und parallel zueinander angeordnet. Die beiden Endglieder 4, 6 sind mit einem etwa torusförmigen, elastomeren und daher flexiblen Balg 8 verbunden, wobei zumindest dieser Balg 8 einen Innenraum 30 der Gasdruckfeder 2 begrenzt. In den Innenraum 30 kann

Druckluft hineingelassen oder aus diesem herausgelassen werden, wodurch sich die beiden Endglieder 4, 6 axial aufeinander zu beziehungsweise voneinander weg bewegen. Zur Befüllung oder Entleerung der Gasdruckfeder 2 dient ein rohrstutzenförmiger Luftanschluss 22, welche außermittig an dem oberen Endglied 4 der Gasdruckfeder 2 ausgebildet ist. Der Luftanschluss 22 ist zur Befüllung oder Entleerung des Innenraumes 30 der Gasdruckfeder 2 über eine Rohrleitung und darin angeordnete, hier nicht dargestellte elektromagnetische Schaltventile mit einer Druckluftquelle und einer Druckluftsenke verbunden. Die Schaltventile sind in bekannter Weise von einer Steuerungseinrichtung ansteuerbar, sofern die Luftmenge im Innenraum 30 verändert und/oder der axiale Abstand zwischen den beiden Endgliedern 4, 6 verändert werden soll. Der Luftanschluss 22 ist innenraumseitig mit einem Gitter 23 abgedeckt, welches luftdurchlässig ist und beispielsweise Ultraschallsignale reflektiert.

Zum Aufbau der Gasdruckfeder 2 ist noch zu ergänzen, dass der Balg 8 an seinem oberen Ende mittels eines Klemmrings 9 an der Unterseite des oberen Endglieds 4 festgeklemmt ist. Hierzu ist der Klemmring 9 unter Zwischenlage eines ersten kreisförmigen Wulstes des Balgs 8 mittels erster Schrauben 24 an dem oberen Endglied 4 befestigt. Das untere Ende des Balgs 8 weist einen zweiten kreisförmigen Wulst 18 auf, welcher sich an einem metallischen Stützring 16 der Gasdruckfeder 2 sowohl axial als auch radial abstützt. Der Stützring 16 sitzt radial außen auf einer weitgehend ringförmigen, elastomeren Dämpfungsschicht 14, welche ihrerseits radial außen auf einem metallischen Stützkörper 12 angeordnet ist. Der metallische Stützkörper 12 weist eine kegelförmige Geometrie auf. Am durchmessergrößeren Ende des Stützkörpers 12 ist ein axial vorstehender Befestigungszapfen 13 ausgebildet, welcher durch eine Bohrung in dem unteren Endglied 6 spielfrei oder mittels Presspassung eingesteckt ist. Außerdem ist der kegelförmige Stützkörper 12 mittels zweiter Schrauben 26 mit dem unteren Endglied 6 der Gasdruckfeder 2 verbunden.

Der metallische Stützkörper 12 und der metallische Stützring 16 sind durch Vulkanisation mit der aus einer Gummimischung bestehenden Dämpfungsschicht 14 fest miteinander verbunden, so dass diese drei Bestandteile zusammen ein einstückiges Gummi-Metall-Bauteil bilden. Der metallische Stützring 16 trägt an seinem innenraumseitigen axialen Ende einen ringförmigen Anschlagdämpfer 20, an dem das obere Endglied 4 zum Aufsitzen gelangt, wenn die Luft aus dem Innenraum 30 der Gasdruckfeder 2 in die Umgebung abgelassen wurde. Um dabei einen rein metallischen Kontakt zu vermeiden weist der Anschlagdämpfer 20 an seiner freien, axial äußeren Stirnseite einen elastomerer Dämpfungsring 28 auf, welcher mittels nicht weiter bezeichneter Schrauben mit dem Dämpfungsring 20 verschraubt ist.

Die Gasdruckfeder 2 ist mit deren oberen, plattenförmigen Endglied 4 an einem Fahrzeugchassis befestigbar, während das untere, plattenförmige Endglied 6 mit einem Bauteil eines Fahrzeugfahrwerks fest verbindbar ist. Durch ein Befüllen der Gasdruckfeder 2 mit Druckluft wird das obere Endglied 4 in Bezug zum unteren Endglied 6 um den Abstand A angehoben, wodurch auch das Fahrzeugchassis gegenüber dem Fahrzeugfahrwerk oder dem Fahrbahnniveau angehoben wird. Bei einem auch nur teilweisen Entleeren des Innenraumes 30 der Gasdruckfeder 2 senkt sich das Fahrzeugchassis gegenüber dem Fahrwerk wieder ab.

Um einen bestimmten Abstand des Fahrzeugchassis von der Fahrbahn einzustellen ist dem eingangs erwähnten Steuerungsgerät eine Information darüber zuzuleiten, welchen Abstand A die beiden Endglieder 4, 6 zueinander haben. Mittels dieser Information kann das Steuerungsgerät darüber entscheiden, wie viel Druckluft noch in den Innenraum 30 der Gasdruckfeder 2 einzuleiten oder aus dieser zu entleeren ist.

Zur möglichst genauen Messung eines gewünschten axialen Abstandes zwischen den beiden Endglieder 4, 6 der Gasdruckfeder 2 zueinander ist bei dieser Einrichtung 1.1 ein Abstandssensor 10 an dem innenraumseitigen Ende des kegelförmigen metallischen Stützkörpers 12 befestigt. Dieser Abstandssensor 10 weist ein aktives Teil und ein passives Teil auf, wobei das aktive Teil ein Ultraschallsender und das passive Teil ein Ultraschallempfänger ist. Beide Teile des Abstandssensors 10 sind an dem innenraumseitigen Ende desselben angeordnet oder ausgebildet. Zur Energieversorgung und zur Weiterleitung der ermittelten Messwerte ist der Abstandssensor 10 über geeignete Leitungen 11 mit dem schon erwähnten, hier nicht dargestellten Steuerungsgerät verbunden.

Die vom Ultraschallsender erzeugten Schallwellen werden, wie in den Figuren angedeutet ist, von dem Abstandssensor 10 durch die Öffnung im Anschlagdämpfer 20 hindurch an die plane Unterseite des oberen Endglieds 4 gesendet, von der diese reflektiert und anschließend vom Ultraschallempfänger des Abstandssensors 10 sensiert werden. Aus der Laufzeitdauer einzelner Ultraschallimpulse kann zusammen mit der bekannten Schallgeschwindigkeit der Abstand A zwischen den beiden Endliedern 4, 6 sehr genau ermittelt werden.

Wie ein Vergleich der beiden Figuren 1 und 2 zeigt, bewirkt die fahrwerkfeste Anordnung des Abstandssensors 10, dass sich bei einer Parallelverschiebung der beiden plattenförmigen Endglieder 4, 6 um die Strecke A1 zueinander, einhergehend mit einer radial ungleichen Verformung des Balges 8, die Messfähigkeit und die Messgenauigkeit der geschilderten Einrichtung 1.1 nicht verschlechtert. Auch ein Verkippen des Anschlagdämpfers 20 um den Winkel α, ebenfalls ausgelöst durch eine gummielastische Verformung des Balgs 8 bei der erwähnten Parallelverschiebung, führt zu keiner Verschlechterung der Messfähigkeit und zu keiner wesentlichen Verschlechterung der Messgenauigkeit.

Zur weiteren Verbesserung oder zumindest zur Konstanthaltung der Messgenauigkeit des Abstandssensors 10 ist bei der in den Figuren 1 und 2 gezeigten Gasdruckfeder 2 vorgesehen, dass Mittel vorhanden sind, mit denen die sende- und empfangsaktive Oberfläche des Abstandssensors 10 frei von Verschmutzungen gehalten wird. Hierzu sind an der radialen Außenseite des Anschlagdämpfers 20 Luftleitbleche 34 angeordnet, mittels denen im Innenraum 30 der Gasdruckfeder 2 bei deren Befüllung und/oder Entleerung strömende Luft zu radiale Öffnungen 32 im Anschlagdämpfer 20 geleitet wird. Diese Öffnungen 32 sind derartig ausgebildet und angeordnet, dass die durch diese hindurchtretende Luft über die sende- und empfangsaktive Oberfläche des Abstandssensors 10 geleitet wird. Hierdurch werden Schmutzpartikel von dieser Oberfläche entfernt, wodurch sich die Sende- und Empfangsfähigkeit des Abstandssensors 10 über dessen gesamte Betriebsdauer konstant optimal gehalten wird.

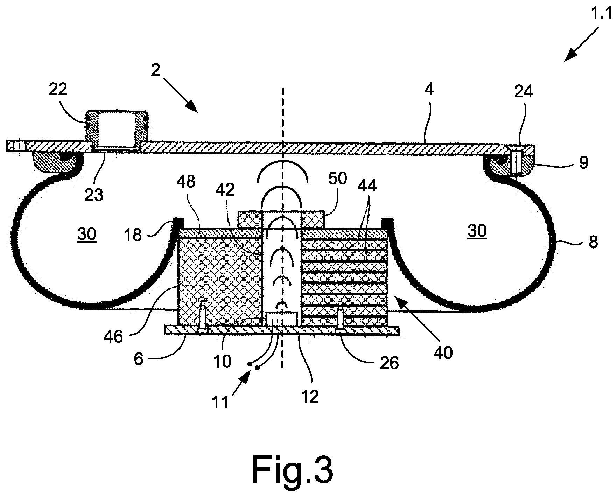

Die in Fig. 3 dargestellte zweite, nicht erfindungsgemäße Ausführungsvariante einer Einrichtung 1.2 weist anders als die gemäß den Figuren 1 und 2 anstelle des metallischen Stützkörpers 12, der Dämpfungsschicht 14 und dem metallischen Stützring 16 bei ansonsten gleichem Aufbau eine Zusatzfeder 40 auf, welche an der Oberseite des unteren Endglieds 6 befestigt ist. Diese Zusatzfeder 40 besteht alternativ aus mehreren übereinander angeordneten scheibenförmigen elastomeren Schichten 44 (rechte Zeichnungshälfte) oder aus einem massiven elastomeren Block 46 (linke Zeichnungshälfte). Zudem weist die Zusatzfeder 40 eine radial zentrale und sich koaxial zur Längsachse der Gasdruckfeder 2 erstreckende Bohrung 42 auf. Der Abstandssensor 10 ist bei diesem Ausführungsbeispiel innerhalb der Bohrung 42 an Oberseite des unteren Endglieds 6 mit freier Sicht auf die Unterseite des oberen Endglieds 4 befestigt. Wie bei der ersten Ausführungsvariante weist auch dieser Abstandssensor 10 sowohl einen Sender als auch einen Empfänger auf, mittels denen optische, akustische oder andersfrequente Signale ausgestrahlt beziehungsweise sensiert werden können.

Es sei noch erwähnt, dass die Zusatzfeder 40 an deren oberen Ende eine scheibenförmige Metallplatte 48 aufweist, an deren chassisnahen Oberseite ein elastomerer Anschlagpuffer 50 befestigt ist. Beim Entlüften des Druckraumes 30 der Gasdruckfeder 2 senkt sich das obere Endglied 4 derselben soweit in Richtung zum unteren Endglied 6 ab, dass das obere Endglied 4 auf dem Anschlagpuffer zur Anlage gelangt und sich dort abstützt. Sowohl die Metallplatte 48 als auch der Anschlagpuffer 50 sind scheibenförmig ausgebildet, und deren jeweilige zentrale Öffnung weist zumindest den gleichen Durchmesser auf wie die Bohrung 42 in dem massiven Block 46 oder bei den scheibenförmigen Schichten 44 der Zusatzfeder 40.

Da auch bei dieser Einrichtung 1.2 zur Bestimmung des axialen Abstandes der beiden Endglieder 4, 6 der Gasdruckfeder 2 der Abstandssensor 10 im Bereich des fahrwerkseitigen unteren Endglieds 6 mit freier Sicht auf die Unterseite des oberen Endglieds 4 angeordnet ist, befindet sich der Abstandssensor 10 quasi im Nullpunkt eines Koordinatensystems, von dem aus vertikale Bewegungen des oberen Endglieds 4 in Bezug zum unteren Endglied 6 der Gasdruckfeder 2 wie geschildert einfach sowie zuverlässig auch bei einer Lateralbewegung des oberen Endglieds 4 messbar sind.

### Bezugszeichenliste

### (Teil der Beschreibung)

- 1.1: Einrichtung (erste Ausführungsform)
- 1.2: Einrichtung (zweite Ausführungsform)
- 2: Gasdruckfeder
- 4: Oberes Endglied der Gasdruckfeder
- 6: Unteres Endglied der Gasdruckfeder
- 8: Balg
- 9: Klemmring
- 10: Abstandssensor (Sender und Empfänger)
- 11: Elektrische Leitungen
- 12: Metallischer Stützkörper
- 13: Befestigungszapfen am Stützkörper 12
- 14: Elastomere Dämpfungsschicht
- 16: Metallischer Stützring
- 18: Fahrwerkseitiger Wulst am Balg
- 20: Anschlagdämpfer
- 22: Luftanschluss
- 23: Gitter
- 24: Erste Schrauben
- 26: Zweite Schrauben
- 28: Elastomerer Dämpfungsring am Anschlagdämpfer
- 30: Innenraum der Gasdruckfeder
- 32: Luftleitmittel, Öffnungen im Anschlagdämpfer
- 34: Luftleitmittel, Luftleitbleche am Anschlagdämpfer
- 40: Zusatzfeder
- 42: Bohrung in der Zusatzfeder
- 44: Schichten der Zusatzfeder
- 46: Massiver Block der Zusatzfeder
- 48: Metallplatte
- 50: Anschlagpuffer
- A: Abstand zwischen den Endgliedern der Gasdruckfeder
- A1: Entfernung, Positionsverschiebung des Luftanschlusses
- α: Kippwinkel

## Patentansprüche

1. Fahrzeug, aufweisend ein Fahrwerk und eine Karosserie, mit einer Gasdruckfeder (2) mit einer Einrichtung (1.1, 1.2) zur Bestimmung des axialen Abstandes zweier in axialer Richtung der Gasdruckfeder (2) zueinander beweglich angeordneter Endglieder (4, 6) der Gasdruckfeder (2), wobei die beiden Endglieder (4, 6) unmittelbar oder mittelbar mit einem flexiblen Balg (8) verbunden sind, welcher einen Innenraum (30) der Gasdruckfeder (2) begrenzt, wobei an einem der beiden Endglieder ein Abstandsensor (10) angeordnet ist, mit dessen Hilfe der axiale Abstand (A) zwischen den beiden Endgliedern (4, 6) bestimmbar ist, wobei an dem fahrwerkseitigen Endglied (6) ein metallischer Stützkörper (12) befestigt ist, an dessen radialen Außenseite eine Dämpfungsschicht (14) aus einem Elastomer befestigt ist, und dass an der radialen Außenseite der Dämpfungsschicht (14) ein metallischer Stützring (16) befestigt ist, an dem sich das fahrwerkseitige Ende des Balgs (8) sowohl axial als auch radial abstützt, wobei der Abstandssensor (10) im Bereich des karosserieseitigen oberen Endes des metallischen Stützkörpers (12) mit Sicht auf die Unterseite des oberen Endglieds (4) so angeordnet ist, dass der Abstandssensor an dem Fahrzeug ortsfest mit einem Fahrwerksteil verbunden ist, wobei ein den Innenraum (30) mit Druckluft versorgender Luftanschluss (22) am oberen Endglied (4) innerhalb des Messbereiches des Abstandssensors (10) angeordnet ist, und dass der Luftanschluss (22) innenraumseitig durch ein luftdurchlässiges Gitter (23) abgedeckt ist.

2. Fahrzeug nach Anspruch 1, **dadurch gekennzeichnet, dass** der metallische Stützkörper (12) eine kegelabschnittförmige Geometrie mit einem fahrwerkseitig größeren Durchmesser aufweist.

3. Fahrzeug nach einem der Ansprüche 1 bis 2, **dadurch gekennzeichnet, dass** am karosserieseitig oberen Ende des Stützrings (16) ein ringförmiger Anschlagdämpfer (20) befestigt ist.

4. Fahrzeug nach einem der Ansprüche 1 bis 3, **dadurch gekennzeichnet, dass** der Abstandssensor (10) derart aufgebaut ist, dass er ein mechanisches, ein optisches oder ein akustisches Messprinzip nutzt.

5. Fahrzeug nach einem der Ansprüche 1 bis 4, **dadurch gekennzeichnet, dass** innerhalb der Einrichtung (1) Luftleitmittel (32) angeordnet oder ausgebildet sind, welche bei einer Bewegung des Balgs (8) innerhalb des Balges (8) befindliche Luft gezielt über den Abstandssensor (10) leiten.

6. Fahrzeug nach Anspruch 5, **dadurch gekennzeichnet, dass** die Luftleitmittel (32) als radiale Öffnungen im Anschlagdämpfer (20) ausgebildet sind.

7. Fahrzeug nach Anspruch 5, **dadurch gekennzeichnet, dass** die Luftleitmittel (32) als Luftleitbleche (34) ausgebildet sind.

## Claims

1. Vehicle, comprising a chassis and a vehicle body, with a gas pressure spring (2) with a device (1.1, 1.2) for determining the axial spacing of two end members (4, 6) of the gas pressure spring (2) which are arranged such that they can be moved in the axial direction of the gas pressure spring (2) with respect to one another, the two end members (4, 6) being connected directly or indirectly by way of a flexible gaiter (8) which delimits an interior space (30) of the gas pressure spring (2), a distance sensor (10) being arranged on one of the two end members, with the aid of which distance sensor (10) the axial distance (A) between the two end members (4, 6) can be determined, a metallic supporting body (12) being fastened to the chassis-side end member (6), to the radial outer side of which supporting body (12) a damping layer (14) made from an elastomer is fastened, and a metallic supporting ring (16) being fastened to the radial outer side of the damping layer (14), on which supporting ring (16) the chassis-side end of the gaiter (8) is supported both axially and radially, the distance sensor (10) being arranged in the region of the body-side upper end of the metallic supporting body (12) with a view of the lower side of the upper end member (4) in such a way that the distance sensor is connected on the vehicle in a stationary manner to a chassis part, an air connector (22) which supplies the interior space (30) with compressed air being arranged on the upper end member (4) within the measuring region of the distance sensor (10), and the air collector (22) being covered on the interior space side by way of an air-permeable grille (23).

2. Vehicle according to Claim 1, **characterized in that** the metallic supporting body (12) has a conical segment-shaped geometry with a diameter which is greater on the chassis side.

3. Vehicle according to either of Claims 1 or 2, **characterized in that** an annular stop damper (20) is fastened to the body-side upper end of the supporting ring (16).

4. Vehicle according to one of Claims 1 to 3, **characterized in that** the distance sensor (10) is constructed in such a way that it utilizes a mechanical, and optical or an acoustic measuring principle.

5. Vehicle according to one of Claims 1 to 4, **characterized in that** air guiding means (32) which guide air which is situated within the gaiter (8) in a targeted manner over the distance sensor (10) in the case of a movement of the gaiter (8) are arranged or configured within the device (1).

6. Vehicle according to Claim 5, **characterized in that** the air guiding means (32) are configured as radial openings in the stop damper (20).

7. Vehicle according to Claim 5, **characterized in that** the air guiding means (32) are configured as air guiding plates (34).

## Revendications

1. Véhicule, présentant un châssis et une carrosserie, avec un ressort à pression de gaz (2) avec un dispositif (1.1, 1.2) pour déterminer la distance axiale de deux éléments d'extrémité (4, 6) du ressort à pression de gaz (2) agencés de manière mobile l'un par rapport à l'autre dans la direction axiale du ressort à pression de gaz (2), les deux éléments d'extrémité (4, 6) étant reliés directement ou indirectement à un soufflet flexible (8) qui délimite un espace intérieur (30) du ressort à pression de gaz (2), un capteur de distance (10) étant agencé sur l'un des deux éléments d'extrémité, à l'aide duquel la distance axiale (A) entre les deux éléments d'extrémité (4, 6) peut être déterminée, un corps d'appui métallique (12) étant fixé sur l'élément d'extrémité (6) côté châssis, sur le côté extérieur radial duquel est fixée une couche d'amortissement (14) en un élastomère, et sur le côté extérieur radial de la couche d'amortissement (14) étant fixée une bague d'appui métallique (16) sur laquelle l'extrémité côté châssis du soufflet (8) s'appuie aussi bien axialement que radialement, le capteur de distance (10) étant agencé dans la zone de l'extrémité supérieure côté carrosserie du corps d'appui métallique (12) avec vue sur le côté inférieur de l'élément d'extrémité supérieur (4) de telle sorte que le capteur de distance est relié de manière fixe sur le véhicule à une partie de châssis, un raccord d'air (22) alimentant l'espace intérieur (30) en air comprimé étant agencé sur l'élément d'extrémité supérieur (4) à l'intérieur de la zone de mesure du capteur de distance (10), et le raccord d'air (22) étant recouvert côté espace intérieur par une grille (23) perméable à l'air.

2. Véhicule selon la revendication 1, **caractérisé en ce que** le corps d'appui métallique (12) présente une géométrie en forme de section conique avec un diamètre plus grand côté châssis.

3. Véhicule selon l'une quelconque des revendications 1 à 2, **caractérisé en ce qu'**un amortisseur de butée annulaire (20) est fixé à l'extrémité supérieure, côté carrosserie, de la bague d'appui (16).

4. Véhicule selon l'une quelconque des revendications 1 à 3, **caractérisé en ce que** le capteur de distance (10) est conçu de telle sorte qu'il utilise un principe de mesure mécanique, optique ou acoustique.

5. Véhicule selon l'une quelconque des revendications 1 à 4, **caractérisé en ce que** des moyens de guidage d'air (32) sont agencés ou réalisés à l'intérieur du dispositif (1), lesquels guident de manière ciblée l'air se trouvant à l'intérieur du soufflet (8) sur le capteur de distance (10) lors d'un mouvement du soufflet (8).

6. Véhicule selon la revendication 5, **caractérisé en ce que** les moyens de guidage d'air (32) sont réalisés sous forme d'ouvertures radiales dans l'amortisseur de butée (20).

7. Véhicule selon la revendication 5, **caractérisé en ce que** les moyens de guidage d'air (32) sont réalisés sous forme de déflecteurs d'air (34).
